# EUROPÄISCHE PATENTSCHRIFT

(11) **EP 0 352 735 B1**
(45) Veröffentlichungstag und Bekanntmachung des Hinweises auf die Patenterteilung: **23.03.1994**
(21) Anmeldenummer: 89113694.7
(22) Anmeldetag: 25.07.1989
(51) Int. Cl.: H04M 3/20, H04M 9/00, H04Q 3/00

(54) **Verfahren zur Durchführung einer leistungsmerkmalsspezifischen Steuerprozedur in einem rechnergesteuerten Kommmunikationssystem insbesondere einem Key-Kommunikationssystem, mit der Möglichkeit des sogenannten "Anklopfens"**
Method for realizing a service-specific command procedure in a calculator-controlled communication system, especially a key telephone system, with the posibility of breaking-in
Méthode pour réaliser une procédure de commande de service spécifique dans un système de communication commandé par calculateur en particulier un système de communication à touches avec la possibilité de branchement sur une connexion existante

(30) Priorität: 26.07.1988 DE 3825385
(43) Veröffentlichungstag der Anmeldung: 31.01.1990
(73) Patentinhaber: SIEMENS AKTIENGESELLSCHAFT, 80333 München (DE)
(72) Erfinder: Böttger, Detlev, D-5840 Schwerte 4 (DE)

(56) Entgegenhaltungen:
- ERICSSON REVIEW, Band 60, Heft 1, 1983, Seiten 7-13, Stockholm, SE; G. JISMALM: "Office communication system DIAVOX 406"
- INTERNATIONAL CONFERENCE ON COMMUNICATIONS '86, Toronto, 22. - 25. Juni 1986, Seiten 18-22, IEEE, New York, US; J.A. SWART: "ISDN business services"

## Beschreibung

Die Erfindung betrifft ein Verfahren zur Durchführung einer leistungsmerkmalsspezifischen Steuerprozedur im Zusammenhang mit der Möglichkeit, in einem rechnergesteuerten Kommunikationssystem, insbesondere einem Key-Kommunikationssystem, einen besetzten Teilnehmer durch eine während seiner Gesprächsverbindung übertragbare Hinweisinformation und gleichzeitiger Anzeige der Identität der diese Information bewirkenden Teilnehmerstelle auf dem Display des jeweiligen Endgerätes auf einem ihn betreffenden dringenden Verbindungswunsch aufmerksam zu machen, wobei die hierfür notwendige Information über eine Steuerverbindung übertragen wird, die zusätzlich neben der der Übertragung der Nutzinformation dienenden Nutzverbindung vorgesehen ist und wobei normalerweise unmittelbar nach Beendigung einer Gesprächsverbindung die Rechnersteuerung diese Teilnehmerstelle anwählt und aufgrund des Meldens an dieser Teilnehmerstelle die Verbindung mit der sie anfordernden Teilnehmerstelle herstellt.

Modern konzipierte Kommunikationssysteme sind nicht nur zur eigentlichen Vermittlungssteuerung, sondern auch zu einer Steuerung bzw. Realisierung zusätzlicher über den eigentlichen Vermittlungsvorgang hinausgehender Steuervorgänge befähigt. Solche zusätzlichen Funktionen werden im allgemeinen als Leistungsmerkmale bezeichnet, wobei eine große Anzahl unterschiedlichster Leistungsmerkmale bekannt ist. Derartige Leistungsmerkmale können entweder bei Belegen der Vermittlungseinrichtung oder aber während einer bereits bestehenden Gesprächsverbindung eingeleitet werden. Dies kann beispielsweise durch die Wahl bestimmter Ziffern bzw. Ziffernkombinationen oder durch die Betätigung sogenannter Funktionstasten erfolgen. Zu solchen Leistungsmerkmale zählen beispielsweise akustische Hinweise für wartende Teilnehmer, die Verhinderung unerwünschter Verbindungen, die selbsttätige Rufweiterleitung und das Anklopfen. Vermittels dieses letztgenannten Leistungsmerkmals, für dessen Aktivierung der Teilnehmer eine Handhabung an seinem Endgerät vorzunehmen hat oder das auch nach Ablauf einer bestimmten Zeit automatisch eingeleitet werden kann, ist ein besetzt vorgefundener Teilnehmer darüber zu informieren, daß ein anderer Teilnehmer ihn dringend zu sprechen wünscht. Eine Kommunikationsanlage, in der u.a. dieses zuletzt genannte Leistungsmerkmal realisiert ist, ist in der Druckschrift "ERICSSON Review, Band 60, Heft 1, 1983, Seiten 7 bis 13, beschrieben.

Die voraussetzungsgemäß vorgesehene Nutzverbindungsmöglichkeit und die davon getrennte Steuerverbindungsmöglichkeit kann als Nutzkanal bzw. als Steuerkanal physikalisch auf dem gleichen Übertragungsmedium getrennt durch unterschiedliche Zeitlagen realisiert sein. Sie können aber auch durch jeweils zwei Adernpaare gebildet werden. Bei einem Key-Kommunikationssystem, bei dem beispielsweise die Endeinrichtungen über voneinander unabhängige Adernpaare sternförmig an das System angeschlossen sind, ist es bekannt, neben der normalen Wähltastatur weitere leitungs- bzw. teilnehmerindividuelle Tasten vorzusehen, durch deren Betätigung unmittelbar eine Belegung der betreffenden Leitung, insbesondere der externen Leitungen, und die Verbindungsherstellung zu den internen Teilnehmern erfolgt. Weiterhin wird an jeder Endeinrichtung der vermittlungstechnische Zustand aller übrigen Endeinrichtungen und der einzelnen externen Leitungen angezeigt. Neben der Anzeige durch Leuchtelemente, die unmittelbar den einzelnen Funktionstasten zugeordnet und in der Regel in diesen integriert sind, werden dem Teilnehmer auch optische Hinweise in Form einer Anzeige auf dem an der Endeinrichtung vorhandenen Display gegeben.

Es wird ein Kommunikationssystem vorausgesetzt, bei dem nach der Beendigung einer Gesprächsverbindung mit der Rückkehr in den Freizustand und bei Bestehen einer Anforderung für eine Gesprächsverbindung durch eine andere Teilnehmerstelle durch die Rechnersteuerung die durch das "Anklopfen" angeforderte Teilnehmerstelle angewählt wird. Mit dem Melden dieses Teilnehmers erfolgt die Herstellung der gewünschten Verbindung.

Es ist die Aufgabe der Erfindung, für eine solche angeforderte Teilnehmerstelle die Möglichkeit zu schaffen, den im Zusammenhang mit dem "Anklopfen" vorgesehenen automatischen Ablauf zu durchbrechen.

Dies wird dadurch erreicht, daß zur Unterdrückung der normalerweise erfolgenden Anwahl und der Verbindungsherstellung zwischen den vorab genannten Teilnehmerstellen im Zustand der nach wie vor durch den angeforderten Teilnehmer teilnehmerseitig geschlossenen Teilnehmerleitungsschleife durch diesen Teilnehmer der die Verbindungsphase überwachenden Rechnersteuerung über die Steuerverbindung eine bestimmte Signalisierungsinformation übermittelt wird, die - sofern der Verbindungswunsch durch den die Hinweisinformation initiierenden Teilnehmer weiterhin aufrechterhalten ist - die Rechnersteuerung veranlaßt, die unmittelbar sich anschließende Absetzung der Wahlinformation für den sofortigen Aufbau einer beabsichtigten nachfolgenden Gesprächsverbindung zuzulassen und die daran geknüpften Steuervorgänge einzuleiten.

Der Teilnehmer, für den die Hinweisinformation auf einen dringenden Verbindungswunsch einer anderen Teilnehmerstelle bestimmt ist, kann also die im Zusammenhang mit diesem "Anklopfen" vorgesehenen Abläufe durchbrechen und ohne Auflegen bzw. ohne einer diesem Auflegen entsprechenden Handlung die Gesprächsverbindung beenden. Er bleibt im Zustandsspeicher der Rechnersteuerung als belegt gekennzeichnet und die Teilnehmerleitungsschleife zum System hin ist weiterhin geschlossen. Durch die vom angeforderten Teilnehmer bewirkte Signalisierungsinformation an der Rechnersteuerung ist dann im Zusammenhang mit dem bestehenden Anklopfzustand die Zurückstellung des Anklopfgespräches möglich. Er hat also damit die Möglichkeit, entgegen den vorgesehenen Abläufen zwischenzeitlich ein notwendiges Gespräch zu führen. Wird dann dieses Gespräch in üblicher Weise beendet, erfolgt die automatische Verbindung mit dem anfordernden Teilnehmer.

Die Berechtigung für die Abgabe dieser Signalisierungsinformation kann nur einzelnen im Kundendatenspeicher durch eine gesonderte Kennzeichnung vorbestimmten Teilnehmerstellen zugeteilt sein.

Gemäß einer Weiterbildung der Erfindung kann diese Signalisierung in der Wahl einer bestimmten Codeziffer bzw. Codeziffernkombination erfolgen. Es kann auch vorgesehen werden, daß die Signalisierungsinformation ausschließlich durch die Betätigung einer entsprechend programmierten Funktionstaste der Rechnersteuerung übermittelt wird.

Das erfindungsgemäße Verfahren wird nachstehend anhand einer Figur erläutert.

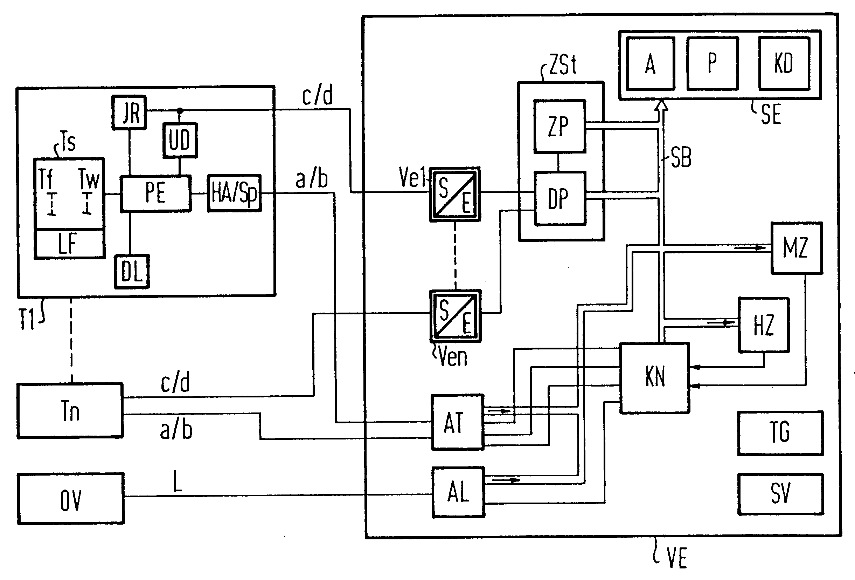

Die Figur zeigt eine schematische Darstellung einer Fernsprechvermittlungseinrichtung VE, an die Teilnehmerendeinrichtungen T1...Tn sternförmig angeschlossen sind. Die Sprachübertragung soll im Ausführungsbeispiel auf analoge Weise erfolgen. Für den Anschluß der Endeinrichtungen wird eine vieradrige Anschlußleitung verwendet, die jeweils aus einem die Nutzverbindung darstellenden Sprechadernpaar a/b und einem die Steuerverbindung darstellenden Signalisierungsadernpaar c/d besteht. Bei einem ausschließlich digitalen Vermittlungssystem wäre die Steuerverbindung und die für die Übertragung der Sprachinformationen vorgesehene Nutzverbindung auf einer zweiadrigen Anschlußleitung realisierbar, wobei dann mindestens ein Nutzkanal und ein Steuerkanal für jede Endeinrichtung durch eine bestimmte Zeitlage gebildet wird.

Zur im wesentlichen prozeduralen Anpassung werden die Teilnehmerendeinrichtungen T1...Tn über eine Anschalteeinheit AT, die auch die Rufanschaltung beinhaltet, mit der elektronischen Koppeleinrichtung KN verbunden. Für die zu einer öffentlichen Vermittlungsstelle OV oder zu einem privaten Netz führenden Leitungen L erfolgt dies über die Anschalteeinheit AL. Die Steuerungsaufgaben des Systems übernimmt die zentrale Steuerrechnereinheit ZSt, die über einen Systembus SB mit einer Speichereinheit SE, den genannten Anschalteeinheiten AT bzw. AL und den weiteren Systemkomponenten, wie beispielsweise der Koppeleinrichtung KN, einer für die Bildung der Mehrfrequenzcodezeichen dienenden Einheit MZ und einer für die Erzeugung der Hörtöne zuständigen Einheit HZ verbunden ist. Die Aufgaben der zentralen Steuerrechnereinheit sind im Ausführungsbeispiel auf zwei Prozessoren verteilt. Der Prozessor ZP soll beispielsweise der vermittlungstechnischen Steuerung dienen und durch den Prozessor DP soll unter Einschaltung der ein Sendeteil S und ein Empfangsteil E enthaltenden Verarbeitungseinheiten Ve die Signalisierungsbearbeitung erfolgen. Eine solche Verarbeitungseinheit Ve ist jedem Signalisierungsadernpaar c/d zugeordnet.

Über diese Signalisierungsadern c/d wird eine wechselseitige Informationsübertragung zwischen einer Endeinrichtung T und der zentralen Steuerrechnereinheit ZSt vorgenommen. Wie dies für die einzelne Funktionskomponenten zeigende Endeinrichtung T1 angedeutet ist, können in einem Tastensatz Ts neben den Zifferntasten Tw der Wähltastatur weitere Funktionstasten Tf vorhanden sein. Bei der Betätigung der leitungs- bzw. teilnehmerindividuellen Tasten kann unmittelbar eine Belegung der betreffenden Leitung, z. B. der externen Leitung L, erfolgen und es kann die Verbindungsherstellung zu einem internen Teilnehmer vorgenommen werden. Das Kommunikationssystem VE soll ein Key-System sein, bei dem also an jeder Endeinrichtung der vermittlungstechnische Zustand aller übrigen Endeinrichtungen und der Belegungszustand der einzelnen externen Leitungen angezeigt wird. Als Anzeigeelemente können beispielsweise Leuchtdioden dienen, die in den jeweiligen Funktionstasten Tf integriert sind. Die Informationsübertragung von der zentralen Steuerrechnereinheit ZSt der Vermittlungseinrichtung zu den einzelnen Endeinrichtungen T1...Tn kann sich beispielsweise auf Einstellinformationen für diese Leuchtelemente beziehen, die zu unterschiedlichen Leuchtzuständen führen können. Dies erfolgt unter Einbeziehung der in jeder Endeinrichtung vorhandenen Steuereinheit PE. Im Ausführungsbeispiel sollen die von der Vermittlungseinrichtung VE zu einer Endeinrichtung über die Signalisierungsadern c/d übertragenen Informationen durch eine binäre Spannungsmodulation und die in der Gegenrichtung zu übertragenden Informationen durch eine binäre Strommodulation übermittelt werden. Mit letzterer wird dann beispielsweise die an der jeweiligen Endeinrichtung vorgenommene Betätigung einzelner Tasten signalisiert. Dies soll in Verbindung mit der Steuereinheit PE durch die Einheit JR erfolgen. Die in der Gegenrichtung aufgrund der vorgesehenen Spannungsmodulation an den jeweiligen Signalisierungsadern auftretenden Informationsbits werden in Zusammenwirkung mit der Steuereinheit PE durch die Einheit UD registriert. Sie führen zur entsprechenden Ansteuerung der genannten Leuchtelemente LF. Zusätzlich oder anstelle dieser Leuchtelemente kann auch eine entsprechende Darstellung auf einem an der Endeinrichtung vorhandenen Display DL erfolgen. Auf diesem Display DL sind auch die im Zusammenhang mit dem Aufbau und dem Umkoppeln einer Verbindung für den Teilnehmer bestimmten Hinweise darzustellen. So können beispielsweise die für eine optische Bedienerführung vorgesehenen kurzen Informationstexte auf diesem Display angezeigt werden.

Über das jeweilige Adernpaar a/b werden die Sprachinformationen übertragen. Mit diesen Sprechadern ist die Sprechschaltung SP verbunden. Sie dient im Zusammenhang mit dem Handapparat HA der Verarbeitung der übertragenen Sprachinformationen und bildet den Leitungsabschluß.

Eine derartige Vermittlungseinrichtung ist in ihrer Grundstruktur bekannt. Es erübrigt sich also insoweit eine detaillierte Darstellung der schaltungstechnischen Realisierung als auch eine Beschreibung der Vorgänge bei einem Verbindungsaufbau und dem Verbindungsabbau. Es sei lediglich erwähnt, daß die Prozessoren ZP und DP über den Systembus SB Zugriff zu den in der Speichereinrichtung SE abgelegten Daten haben. Diese betreffen u. a. das in dem Speicher P abgelegte gesamte Systemprogramm und die zu ihm gehörenden und im Arbeitsspeicher A enthaltenen betriebstechnischen Daten. In dem Speicherteil KD sind die Kundendaten abgelegt. Hierzu gehören beispielsweise die den einzelnen Teilnehmerendgeräten zugeteilten Berechtigungen für die Inanspruchnahme bestimmter Leistungsmerkmale. Das Konfigurieren dieser Daten kann beispielsweise über die Eingabetastatur einer als Betriebsterminal festlegbaren Endeinrichtung erfolgen.

Für die Realisierung von leistungsmerkmalsspezifischen Steuerprozeduren beinhaltet die Steuerrechnereinheit ZSt einzelne Programmsteuerungen, die auf die in den entsprechenden Speichern enthaltenen Steuerdaten zugreifen. So soll beispielsweise für das Kommunikationssystem VE die Möglichkeit bestehen, einem sich in einer Gesprächsverbindung befindlichen Teilnehmer den eigenen dringenden Verbindungswunsch anzukündigen. Dieses sogenannte "Anklopfen" besteht darin, daß von der Steuerrechnereinheit ZSt ein bestimmter Hinweiston periodisch in die für den gewünschten Teilnehmer bestehende Gesprächsverbindung eingeblendet wird. Zusätzlich kann eine entsprechende Anzeige auf dem Display DL erfolgen, der auch die Identität des die Gesprächsverbindung anfordernden Teilnehmers entnehmbar ist. Die Aktivierung dieses Leistungsmerkmals kann durch die Betätigung einer diesem Leistungsmerkmal zugeordneten Funktionstasten oder durch eine Kennzahlwahl erfolgen. Es kann auch vorgesehen sein, daß nach dem Anwählen des im Besetztzustand vorgefundenen gewünschten Teilnehmers dieses Anklopfen automatisch nach Ablauf einer bestimmten Zeit durch die Steuerrechnereinheit, die die einzelnen Verbindungsphasen überwacht, eingeleitet wird. Von dem Augenblick an, an dem die auf den dringenden Gesprächswunsch hinweisende Information z. B. in Form eines entsprechenden Hinweistones abgesetzt wird, ändert sich für die anfordernde Teilnehmerstelle der bis dahin eingespeiste Besetztton in einen besonderen Rufton. Damit wird dann dieser Teilnehmer darüber informiert, daß angeklopft wird.

Beendet nun der angeforderte Teilnehmer daraufhin sein Gespräch und legt auf, so wird zunächst in üblicher Weise diese Gesprächsverbindung abgebaut und somit ausgelöst. Daraufhin wird dann - bedingt durch den weiterhin bestehenden Zustand des Anklopfens - durch die Rechnersteuerung, die die einzelnen Verbindungsphasen überwacht, automatisch eine Verbindung zwischen der anfordernden Teilnehmerstelle und der angeklopften Teilnehmerstelle aufgebaut. Im Normalfall hat also der angeklopfte Teilnehmer aufgrund dieser einprogrammierten Funktionsabläufe keine Möglichkeit, unmittelbar anschließend mit einer anderen als der anfordernden Teilnehmerstelle in eine Gesprächsverbindung einzutreten. Wird jedoch durch den angeklopften Teilnehmer während des anstehenden Anklopfens eine bestimmte Signalisierungsinformation der Rechnersteuerung übermittelt, so wird durch diese entsprechend ausgewertete Information durch die Rechnersteuerung die systeminterne Auslösung des für diese angeforderte Teilnehmerstelle bestehenden Gespräches veranlaßt, obwohl an der betreffenden Teilnehmerstelle keine Auftrennung der Leitungsschleife erfolgte. An der betreffenden Teilnehmerstelle ist also voraussetzungsgemäß der Handapparat weiterhin abgehoben bzw. es wird eine diesem Abheben entsprechende Funktion aufrechterhalten. Dies ist beispielsweise bei der Beibehaltung des sogenannten Freisprechmodus der Fall. Die Leitungsschleife zum System bleibt also bestehen. Die Signalisierungsinformation, die bei Bestehen der genannten beiden Zustände die interne Auslösung der Gesprächsverbindung bewirkt, wird beispielsweise durch die Betätigung einer entsprechend programmierten Funktionstaste der Rechnersteuerung übermittelt. Es wird die Tatsache, daß der Handapparat weiterhin abgehoben ist, durch eine entsprechende Abtastung und Auswertung des Leitungszustands erkannt und daraufhin der Wahlabrufton angelegt. Der Teilnehmer kann also durch die geschilderte Prozedur das Anklopfgespräch zurückstellen und stattdessen eine nachfolgende Gesprächsverbindung aufbauen. Für den anfordernden Teilnehmer ändert sich die aufgrund seines Anklopfens aktivierte Signalisierung nicht. Der Teilnehmer, der das normalerweise durchgreifende Anklopfgespräch vertagt hat und sich in der nachfolgend aufgebauten Gesprächsverbindung befindet, kann bei weiterhin aufrechterhaltenem Anklopfen durch den anfordernden Teilnehmer dieses Anklopfen dann durch die vorgesehene Prozedur beantworten. Beendet er beispielsweise das Gespräch durch Auflegen bzw. durch eine Aktivierung des diesem Auflegen entsprechenden Funktion, so wird er automatisch mit dem anklopfenden Teilnehmer verbunden.

Es kann vorgesehen werden, daß die Berechtigung für diese beschriebene Zurückstellung eines Gespräches mit dem anklopfenden Teilnehmer nur für bestimmte Teilnehmerstellen möglich ist.

Im Ausführungsbeispiel ist mit TG der für die gesamte Taktversorgung vorhandene Taktgenerator und mit SV die der Stromversorgung dienende Einheit bezeichnet.

## Patentansprüche

1. Verfahren zur Durchführung einer leistungsmerkmalsspezifischen Steuerprozedur im Zusammenhang mit der Möglichkeit, in einem rechnergesteuerten Kommunikationssystem (VE), insbesondere einem Key-Kommunikationssystem, einen besetzten Teilnehmer (T1) durch eine während seiner Gesprächsverbindung übertragbare Hinweisinformation und gleichzeitiger Anzeige der Identität der diese Information bewirkenden Teilnehmerstelle auf dem Display (DL) des jeweiligen Endgerätes auf einen ihn betreffenden dringenden Verbindungswunsch aufmerksam zu machen, wobei die hierfür notwendige Information über eine Steuerverbindung (c/d) übertragen wird, die zusätzlich neben der der Übertragung der Nutzinformation dienenden Nutzverbindung (a/b) vorgesehen ist, und wobei normalerweise unmittelbar nach Beendigung der Gesprächsverbindung die Rechnersteuerung (ZSt) diese Teilnehmerstelle (T1) anwählt und aufgrund des Meldens an dieser Teilnehmerstelle (T1) die Verbindung mit der sie anfordernden Teilnehmerstelle (Tn) herstellt,
**dadurch gekennzeichnet**,
daß zur Unterdrückung der normalerweise erfolgenden Anwahl und der Verbindungsherstellung zwischen den obengenannten Teilnehmerstellen (T1, Tn) im Zustand der nach wie vor durch den angeforderten Teilnehmer (T1) teilnehmerseitig geschlossenen Teilnehmerleitungsschleife durch diesen Teilnehmer (T1) der die Verbindungsphasen überwachenden Rechnersteuerung (ZSt) über die Steuerverbindung (c/d) eine bestimmte Signalisierungsinformation übermittelt wird, die
- sofern der Verbindungswunsch durch den die Hinweisinformation initiierenden Teilnehmer (Tn) weiterhin aufrechterhalten ist,
- die Rechnersteuerung (ZSt) veranlaßt, die unmittelbar sich anschließende Absetzung der Wahlinformation für den sofortigen Aufbau einer beabsichtigten nachfolgenden Gesprächsverbindung zuzulassen und die daran geknüpften Steuervorgänge einzuleiten.

2. Verfahren nach Anspruch 1,
**dadurch gekennzeichnet,**
daß die Berechtigung für die Signalisierung bestimmten, im Kundendatenspeicher (KD) gesondert gekennzeichneten Teilnehmerstellen zugeteilt ist.

3. Verfahren nach Anspruch 1,
**dadurch gekennzeichnet,**
daß die Signalisierungsinformation durch die Betätigung einer entsprechend programmierten Funktionstaste (Tf) übermittelt wird.

4. Verfahren nach Anspruch 1,
**dadurch gekennzeichnet,**
daß die Signalisierungsinformation durch die Wahl einer bestimmten Codeziffer bzw. Codeziffernkombination übermittelt wird.

## Claims

1. Method for carrying out a service-specific control Procedure in connection with the possibility of alerting, in a computer-controlled communications system (VE), particularly a key communications system, a busy subscriber (T1) to an urgent call request relating to him by means of a notification information item which can be transmitted during his call connection and simultaneous indication of the identity of the subscriber station effecting this information item on the display (DL) of the respective terminal, the information item necessary for this being transmitted via a control connection (c/d) which is provided additionally in addition to the user connection (a/b) used for transmitting the user information, and in which the central processor (ZSt) normally dials this subscriber station (T1) directly after termination of the call connection and establishes the connection with the subscriber station (Tn) requesting it on the basis of the answering at this subscriber station (T1), characterized in that for suppressing the dialling normally taking place and the establishment of connection between the above-mentioned subscriber stations (T1, Tn) in the state of the subscriber line loop, which is still closed at the subscriber end by the requested subscriber (T1), this subscriber (T1) transfers a particular signalling information item to the central processor (ZSt) monitoring the connection phases via the control connection (c/d), which
- if the connection request is still maintained by the subscriber (Tn) initiating the notification information item,
- causes the central processor (ZSt) to permit the directly following transmission of the dialling information item for the immediate setting-up of an intended subsequent call connection and initiate the associated control processes.

2. Method according to Claim 1, characterized in that the authorization for the signalling is allocated to certain subscriber stations separately identified in the customer data memory (KD).

3. Method according to Claim 1, characterized in that the signalling information item is transmitted by operating a correspondingly programmed function key (Tf).

4. Method according to Claim 1, characterized in that the signalling information item is transferred by dialling a particular code number or code number combination.

## Revendications

1. Procédé de mise en oeuvre d'une procédure de commande spécifique à des caractéristiques de puissance et en rapport avec la possibilité, dans un système, de communication (VE) assisté par ordinateur, notamment dans un système de communication-Key, d'attirer l'attention d'un abonné (T1) occupé sur le souhait de liaison urgent le concernant, par une information d'indication pouvant être transmise pendant sa liaison de conversation, et par des indications simultanées concernant l'identité du poste d'abonné provoquant cette information, et sur l'écran (VE) du terminal, du type dans lequel l'information nécessaire à cet effet est transmise par l'intermédiaire d'une liaison de commande (c/d), qui est prévue en plus de la liaison utile (a/b) servant à la transmission de l'information utile, et du type dans lequel l'unité de commande formant ordinateur (ZSt) selectionne normalement, et directement après le début de la liaison de conversation, ce poste d'abonné (T1) et établit, sur la base de la signalisation à ce poste d'abonné (T1), la liaison demandée avec le poste d'abonné (Tn),
caractérisé en ce que,
pour supprimer la sélection et l'établissement de liaisons, s'effectuant normalement, entre les postes d'abonnés (T1, Tn) précédemment cités, dans l'état de la boucle de ligne d'abonné, qui est fermée côté abonné aussi bien en amont qu'en aval par l'abonné demandé (T1), on transmet à l'unité de commande formant calculateur (ZSt) et surveillant les phases de liaison, par cet abboné (T1) et par l'intermédiaire de la liaison de commande (c/d), une information de signalisation déterminée qui
- tant que le souhait de liaison continue à être maintenu par l'abonné (Tn) initialisant l'information d'indication,
autorise l'unité de commande formant ordinateur (ZSt) à admettre la transmission directement suivante de l'information de sélection pour l'établissement immédiat d'une liaison de conversation intentionnelle suivante, et à commencer les processus de commande qui y sont combinés.

2. Procédé suivant la revendication 1, caractérisé en ce que l'on attribue l'autorisation de signalisation de postes d'abonnés déterminés et caractérisés de manière particulière dans la mémoire de données des utilisateurs (KD).

3. Procédé suivant la revendication 1, caractérisé en ce que l'on transmet l'information de signalisation, par la manoeuvre d'une touche de fonction (Tf) programmée de manière correspondante.

4. Procédé suivant la revendication 1, caractérisé en ce que l'on transmet l'information de signalisation, par le choix d'une combinaison déterminée d'un chiffre codé ou de plusieurs chiffres codés.
